# EUROPÄISCHE PATENTSCHRIFT

(11) **EP 1 480 038 B1**
(45) Veröffentlichungstag und Bekanntmachung des Hinweises auf die Patenterteilung: **06.09.2006**
(21) Anmeldenummer: 04450094.0
(22) Anmeldetag: 23.04.2004
(51) Int. Cl.: G01N 27/30, G01N 27/333

(54) **Potentiometrische, ionenselektive Elektrode**
Potentiometric, ion selective electrode
Electrode potentiométrique et sélectivement sensible aux ions

(30) Priorität: 15.05.2003 AT 7442003
(43) Veröffentlichungstag der Anmeldung: 24.11.2004
(73) Patentinhaber: F.HOFFMANN-LA ROCHE AG, 4070 Basel (CH); Eidgenössische Technische Hochschule Zurich (ETH), 8005 Zürich (CH)
(72) Erfinder: Ritter, Christoph, 8045 Graz (AT); Neuhold, Christian, 8044 Graz (AT); Spichiger, Ursula, 8804 Au (CH)
(74) Vertreter: Babeluk, Michael

(56) Entgegenhaltungen:
- US-A- 3 926 764
- US-A- 5 395 505
- US-A- 5 897 758

## Beschreibung

Die Erfindung betrifft eine potentiometrische, ionenselektive Elektrode zur Messung der Konzentration eines Kations in einer Probe, welche auf einem elektrisch isolierenden Substrat ein mittels Dickschichttechnik aufgebrachtes, elektrisch leitendes Elektrodenmaterial aufweist, welches in einem Messbereich von einer ionensensitiven Membran, vorzugsweise einer Flüssigmembran, abgedeckt ist.

Die Verwendung von ionensensitiven Elektroden (ISEs) zur Bestimmung der Konzentration beziehungsweise Aktivität von Ionen in wässrigen Medien ist seit langem bekannt. Konventionelle ISEs bestehen im allgemeinen aus einer ionensensitiven Membran, die mindestens eine ionensensitive Komponente aufweist, und die in ein Kunststoffgehäuse so eingebracht ist, dass eine Seite der Membran mit der Probe unbekannter Konzentration bzw. Aktivität, und eine andere Seite mit einer wässrigen Lösung genau definierter Konzentration, dem sogenannten Innenelektrolyten, kontaktiert ist. Charakteristisch für diese Art von Elektroden ist das Vorhandensein des Innenelektrolyten, dessen konstante Zusammensetzung, zusammen mit dem integrierten internen Referenzsystem (meist Ag/AgCl) stabile Potentialverhältnisse, und damit genaue und zuverlässige Konzentrations- bzw. Aktivitätsbestimmungen garantiert. Eine detaillierte Beschreibung des Aufbaus und der Wirkungsweise von ionensensitiven Elektroden findet sich beispielsweise in "Chemical Sensors and Biosensors for Medical and Biological Applications", Wiley-VCH Verlag GmbH, 1998. In diesem Artikel werden auf Seite 161 Aufbau und Funktion einer sogenannten Flüssigmembran (solvent polymeric membrane) beschrieben. ISEs dieser konventionellen Art haben den Nachteil dass sie aufgrund der wässrigen Komponente (= Innenelektrolyt) anfällig gegenüber Störungen sind, dass sie teuer und kompliziert herzustellen sind, und dass einer Miniaturisierung Grenzen gesetzt sind.

Eine konventionelle ionenselektive Elektrode für Kalzium auf der Basis einer Festkörperelektrode, hauptsächlich bestehend aus Kalziumfluorid und geringen Mengen eines Fluorids, beispielsweise Lanthanfluorid, ist aus der JP 56-066747 A bekannt. Die Elektrode weist in einem zylindrischen Gehäuse eine wässrige Lösung als Innenelektrolyt auf, in weichen eine Ag/AgCl-Referenzelektrode eintaucht.

Weiters ist aus der SU 1418608 A eine Mg-selektive Membranelektrode bekannt, deren Membran auf ein mit einem Innenelektrolyten gefülltes PVC-Röhrchen mit einem Durchmesser von 10 mm befestigt ist. Bei der Herstellung der Membran wird ein Magnesiumsalz zu einer Mischung aus einem Ionophor (Di-Phenyl-Phenanthrolin) und Borat (Natrium-Tetraphenylborat) zugesetzt. Die Elektrode eignet sich für die Messung von Magnesium in medizinischen und pharmazeutischen Anwendungen.

Die US 5,395,505 A beschreibt einen Sensoraufbau, bei welchem auf die interne Referenzelektrode durch Tauchen in eine Schmelze aus einem hygroskopischen Agens und einem Salz eines Kations, welches sich vom zu messenden Kation unterscheidet (sowie optional weiterer Substanzen) eine Schicht aufgebracht wird. Anschließend wird eine ionenselektive Membran zur Abdeckung dieser Anordnung aufgebracht. Im Gebrauch führt das hygroskopische Material dazu, dass Wasser angezogen wird und sich eine interne Lösung bildet, welche bezüglich des oben genannten Kations gesättigt ist. Bei dem beschriebenen Aufbau handelt es sich um eine klassische, ionenselektive Elektrode mit wässrigem Innenelektrolyten, wobei letzterer in situ gebilde wird.

In den letzten Jahren wurden ionensensitive Elektroden entwickelt, bei denen der wässrige Innenelektrolyt durch einen sogenannten Festkontakt ersetzt wurde. Bei diesen Festkontaktelektroden befindet sich die Flüssigmembran direkt auf dem elektrisch leitenden Elektrodenmaterial (elektrischer Leiter bzw. Halbleiter). Derartige Systeme erlauben eine extreme Miniaturisierung solcher Sensoren. Ein wesentlicher Nachteil dieser Systeme sind jedoch instabile Potentialverhältnisse, die auf den elektrischen bzw. elektrochemischen Grenzflächenwiderstand zwischen dem Bereich elektronischer Leitfähigkeit des Elektrodenmaterials und der Leitfähigkeit durch Ionenbewegung der ionensensitiven Membran zurückzuführen sind.

Mehrere Arbeiten beschrieben Möglichkeiten, das Problem der instabilen Potentialverhältnisse durch Verwendung von Redoxpaaren entweder in einer Zwischenschicht zwischen elektrisch leitendem Elektrodenmaterial und ionensensitiver Membran, oder durch Zumischung zur ionensensitiven Membran selbst zu beseitigen. In der CH 677295 A5, sowie Chimia 44, 1990, 214-215 wird die Möglichkeit beschrieben, den Grenzflächenwiderstand zwischen elektrischer Ableitung und der ionensensitiven Membran durch Zugabe eines Redoxpaares (im allgemeinen Halogen/Halogenid) entweder in Form einer Zwischenschicht oder durch Aufdampfen auf das Material der Ableitung zu vermindern. Ein Nachteil dieser Elektrode ist der relativ große Aufwand bei der Herstellung (Bedampfung der Oberfläche), sowie die sehr lange Konditionierphase der Membran von bis zu drei Tagen.

In der US 5,804,049 A wird ein sogenanntes "Fortiophor"-Material zur Potentialstabilisierung beschrieben, Dabei handelt es sich um ein Polymermaterial das in der Lage ist, stabile, reproduzierbare Grenzflächen zwischen den ionischen und elektronischen Bereichen eines ionenselektiven Sensors zu erzeugen. Dieses Polymermaterial wird vorzugsweise zwischen dem internen Referenzelement und der ionenselektiven Membran aufgebracht. Das Polymer besteht bevorzugt aus einem Copolymer aus Methacrylamidopropyltrimethylammoniumchlorid und Methylmethacrylat. Nachteilig dabei ist die Verwendung in Form einer Zwischenschicht zwischen elektrischer Ableitung und ionenselektiver Membran, was höheren Aufwand bei der Herstellung bedeutet, sowie die Tatsache, dass durch Quellung in Folge von Wasseraufnahme Haftungsprobleme entstehen, die bis zur Zerstörung des Membranverbundes führen können.

Gemäß US 5,897,758 A besteht der "Fortiophor" aus einem neutralen Komplexbildner, wie z.B. Dodecyl-16-Crown-5-Ether, in Kombination mit einem Silbersalz in der Form von Silbernitrat, Silberbenzoat oder andere, welche direkt zur ionenselektiven Membran (für z.B. Kalium mit Valinomycin als ionenselektive Komponente) zugemischt werden. Die Potentialstabilisierung geschieht durch die Bildung eines Komplexes mit dem leitfähigen Ion des elektrischen Leiters, z.B. Silber, was zu einem definierten Übergang zwischen ionischen und elektrischen Bereichen des Sensors führt.

Eine deutlich bessere Potentialstabilität sowohl während der Wet-Up Phase als auch über einen längeren Zeitraum hinweg konnte auch durch die Zumischung eines lipophilen Silberligand-Komplexes und des freien Liganden direkt zur Polymermembran von Ionensensitiven Elektroden zur Bestimmung von Natrium oder Ammonium erzielt werden (Anal. Chim. Acta 321, 1996, 173 - 183). Der Silberligand-Komplex und der freie Ligand fungieren dabei als potentialstabilisierendes reversibles Redoxpaar an der Grenzfläche Polymermembran - Silberableitung.

Eine Potentialstabilisierung einer Festkontakt-Ionenselektiven Elektrode wird in der US 5,840,168 A durch Fixierung des M/MX-Verhältnisses (vorzugsweise Ag/AgCl) durch Zugabe einer großen Menge an X-Salzen (z.B. KCl) zum Substrat, einem porösen Graphitstift, erzielt. Die Beladung des Graphitstiftes mit Salz erfolgt dabei durch mehrstündiges Eintauchen desselben in eine Mischung aus Salz, Ionophor und Weichmacher in THF. Die hohe Konzentration an Salz bewirkt, dass es zu keiner Verschiebung beim Verhältnis Ag/AgCl kommt, was wiederum zu stabilen Potentialverhältnissen führt.

In der WO 01/65247 A1 wird die Verwendung einer Zwischenschicht bestehend aus einer Natrium-Vanadium-Bronze beschrieben, die ebenfalls den Übergang zwischen ionenselektiver Membran und elektrischem Kontakt stabilisiert.

Ein wesentlicher Nachteil dieser Systeme ist die aufwendige Herstellung. Die Aufbringung einer Zwischenschicht erfordert einen zusätzlichen Produktionsschritt. Außerdem zeigen alle Zwischenschichten ein gewisses Maß an Quellung, was zu Haftungsproblemen bis hin zu Ablösen der Ionenselektiven Membran führen kann. Weiters sind Systeme, die ein redoxaktives Paar aufweisen, selbst empfindlich gegenüber eventuell in einer Probe vorhandenen redoxaktiven Substanzen.

Aufgabe der vorliegenden Erfindung ist es, eine miniaturisierbare potentiometrische, ionenselektive Elektrode zur Messung der Konzentration eines Kations in einer Probe vorzuschlagen, welche eine deutlich erhöhte Potentialstabilität bei gleichbleibender oder verbesserter Empfindlichkeit gegenüber dem zu messenden Ion aufweist. Weiters soll die Elektrode kostengünstig und einfach nach dem Prinzip der Dickschichttechnik herzustellen sein.

Diese Aufgabe wird erfindungsgemäß dadurch gelöst, dass im Elektrodenmaterial zumindest ein in Wasser lösliches Salz eines Erdalkalimetalls homogen verteilt ist. Das Erdalkalimetallsalz der Form MₘXₙ ist in der Matrix des Elektrodenmaterials suspendierbar. Die Wasserlöslichkeit des Erdalkalimetallsalzes ist vorzugsweise größer 1x10⁻² g/l, und liegt beispielsweise zwischen 1x10⁻² g/l und 1x10⁻¹ g/l.

Erfindungsgemäß kann das Elektrodenmaterial fein dispergierte Aktivkohle- Carbon- Graphit- oder Metallpartikel aufweisen und 10 bis 40 Gewichtsprozent, vorzugsweise 20 bis 30 Gewichtsprozent, zumindest eines Erdalkalimetallsalzes enthalten.

Als Elektrodenmaterial sind alle bekannten, in der Dickschichttechnik zu verarbeitende Materialen einsetzbar, bei welchen eine Zumischung eines Salzes eines Erdalkalimetalls möglich ist. Als Ausgangsmaterial eignen sich z.B. fein verteilte Metallpartikel in organischem Material (EP 0 444 840 A1), welche auch nicht metallische Substanzen enthalten können (US 5,897,758).

Zur Messung der Mg²⁺- oder der Ca²⁺- Konzentration in einer Probe enthält das Elektrodenmaterial der ionensensitiven Elektrode gemäß einer bevorzugten Ausführungsvariante der Erfindung Magnesiumchlorid oder Kalziumchlorid. Zur Herstellung des Elektrodenmaterials wird z.B. fein pulverisiertes MgCl₂ mit einer Graphitpaste, bestehend z.B. aus Graphit oder Aktivkohlepartikel, sowie einem Polymerbindemittel zu einer Paste verarbeitet, in welcher nach dem Abdunsten des Lösungsmittels das Magnesiumsalz homogen in der gesamten Matrix verteilt ist.

Weiters kann zur Messung der Mg²⁺- oder der Ca²⁺- Konzentration in einer Probe, das Elektrodenmaterial erfindungsgemäß Magnesiumazetat oder Kalziumazetat enthalten.

Ein Nebeneffekt der Zumischung des Salzes eines Erdalkalimetalls zum Elektrodenmaterial ist in manchen Fällen (z.B. im Falle eines Ionenselektiven Sensors für die Bestimmung der Konzentration von Magnesiumionen in physiologischen Flüssigkeiten) die Erhöhung der Selektivität der Elektrode.

Die Herstellung einer erfindungsgemäßen ionenselektiven Magnesiumelektrode wird unter Verwendung von Magnesiumchlorid als redoxinaktives Salz näher beschrieben.

### Beispiele

### Herstellung des elektrisch leitenden Elektrodenmaterials

20 bis 30 Gewichtsteile Magnesium-Chlorid werden mit 70 bis 80 Gewichtsteilen Graphitpaste (z.B. Elektrodag 421 SS der Firma Acheson Colloiden B.V. Scheenda/Niederlande) vermengt und in einem Mörser zu einer homogenen Paste aufgeschlossen.

### Elektrodenpräparation

Das elektrisch leidende Elektrodenmaterial wird jeweils in Form eines Rechtecks auf eine Polycarbonatplatte mittels Siebdruckverfahren aufgebracht, und die freien Oberflächen abgesehen von zwei Bereichen, einem zur Kontaktierung mit dem elektronischen Verstärker und einem zur Aufbringung der ionenselektiven Membran, mit einem Isolierlack abgedeckt. Pasten dieser Art lassen sich aufgrund der Feinpulvrigkeit des Salzes beispielsweise sehr gut in Siebdrucktechnik verarbeiten.

Als Vergleich wurden auch unmodifizierte Elektroden hergestellt; dazu wurde das unmodifizierte Elektrodenmaterial (z.B. Elektrodag 421 SS der Firma Acheson Colloiden B.V. Scheenda/Niederlande) ohne Zugabe des Erdalkalimetallsalzes in Form eines Rechtecks auf eine Polycarbonatplatte mittels Siebdruckverfahren aufgebracht, und die freien Oberflächen abgesehen von zwei Bereichen, einem zur Kontaktierung mit dem elektronischen Verstärker und einem zur Aufbringung der ionenselektiven Membran, mit einem Isolierlack abgedeckt.

Auf die freie Oberfläche im Messbereich wird schließlich eine ionenselektive Membran, bestehend aus einer Lösung von 60-70% Weichmacher, 30 bis 40% PVC, 0 bis 2% Borat und 1 bis 3% Ionophor in THF, dispensiert. Nach Abdampfen des Lösungsmittels sind die Sensoren einsatzbereit.

### Messungen

Die Messung der einzelnen Parameter erfolgt potentiometrisch; als Referenzelektrode fungiert eine Kalomel-Elektrode. Als Testmedien wurden Standardlösungen der Roche Diagnostics GmbH verwendet. Gemessen wurde das Potential in Abhängigkeit von der Zusammensetzung der einzelnen Standards, und in Abhängigkeit von der Zeit nach Erstkontakt der Elektroden mit der Standardlösung. Variiert wurde dabei systematisch die Konzentration an primären Ionen und Stör-Ionen.

Die Erfindung wird im folgenden anhand von Zeichnungen näher erläutert. Es zeigen
- Fig. 1: eine schematische Schnlttdarstellung einer erfindungsgemäßen ionenselektiven Elektrode sowie
- Fig. 2: ein Messdiagramm mit der erfindungsgemäßen ionenselektiven Elektrode.

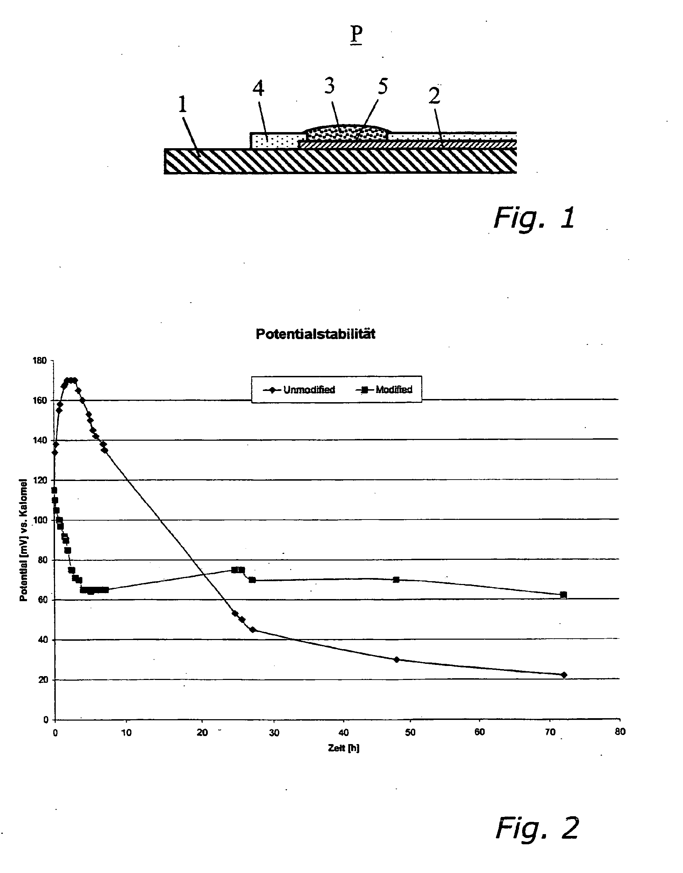

Gemäß Fig. 1 ist auf einem elektrisch isolierenden Substrat 1, bestehend aus beispielsweise Polycarbonat, das elektrisch leitende, das Salz eines Erdalkalimetalls enthaltende Elektrodenmaterial 2 aufgebracht, sowie darüber - im Messbereich 5 die ionenselektive Membran 3. Eine Isolierschicht 4 verhindert einen direkten Kontakt zwischen der Probe P und dem Elektrodenmaterial 2. Die Aufbringung des Elektrodenmaterials 2, sowie der Isolierschicht 4 geschieht vorzugsweise mittels Siebdruck.

Das Elektrodenmaterial 2 besteht aus Graphit oder Aktivkohlepartikel und Partikeln des Erdalkalimetallsalzes. Die einzelnen Partikel werden durch ein Bindemittel verkittet.

Fig. 2 zeigt das Potential der erfindungsgemäßen Elektrode in Abhängigkeit von der Zeit nach Erstkontakt der Elektrode mit der Standardlösung im Vergleich mit einer herkömmlichen Elektrode, ohne Salz im Elektrodenmaterial.

Wie aus Fig. 2 ersichtlich zeigen ionenselektive Elektroden, die ein Erdalkalimetallsalz im Elektrodenmaterial aufweisen (Modified), nach einer Stabilisierungsphase ein stabileres Verhalten, und vor allem eine deutlich geringere Potentialdrift. So verändert sich das Potential gegen eine Referenzelektrode ab drei Stunden nach Erstkontakt der Elektroden mit der Standardlösung über mehrere Tage hinweg nur mehr sehr geringfügig im Vergleich mit einer herkömmlichen Elektrode (Unmodified).

Ein Nebeneffekt der erfindungsgemäßen Zumischung des Salzes zum Elektrodenmaterial ist beispielsweise im Falle einer ionenselektiven Elektrode für die Bestimmung von Magnesium in Körperflüssigkeiten die Erhöhung der Selektivität der Elektrode. Die untenstehende Tabelle zeigt den Einfluss des Vorhandenseins des Magnesiumsalzes im Elektrodenmaterial auf die Selektivitätsverhältnisse erfindungsgemäßer Elektroden im Vergleich zu Elektroden, die kein Salz im Material der Elektrodenableitung aufweisen.

| | Empfindlichkeit des Mg-Sensors gegen Mg [mV/Dek] | |
|---|---|---|
| Zeit [h] | Unmodifizierte Spots | Modifizierte Spots |
| 0,5 | 13,3 | 15,8 |
| 3 | 13,0 | 15,1 |
| 24 | 9,6 | 13,3 |
| 48 | 9,6 | 13,4 |

| | Empfindlichkeit des Mg-Sensors gegen Ca [mV/Dek] | |
|---|---|---|
| Zeit [h] | Unmodifizierte Spots | Modifizierte Spots |
| 0,5 | 15,7 | 15,7 |
| 3 | 17,2 | 16,7 |
| 24 | 17,7 | 16,4 |
| 48 | 18,8 | 17,7 |

Die Zumischung des Magnesiumsalzes zum Material der Elektrodenableitung zeigt eine verbesserte Empfindlichkeit (höhere Werte) der Elektrode gegenüber Magnesium, bei geringfügig verringertem Einfluss von Calcium (niedrigere Werte). Dieses verbesserte Empfindlichkeitsverhalten bleibt während der gesamten Lebensdauer der Elektrode aufrecht. Diese verbesserte Mg-Empfindlichkeit, die auch bei klassischen ionenselektiven Elektroden (Elektrode mit Innenelektrolyt) für die Bestimmung von Magnesium beobachtet wurde (z.B. Eugster, Spichiger, Simon, Anal. Chem. 65, 1993, S. 689 - 695) lassen die Interpretation zu, dass sich auch bei der erfindungsgemäßen Elektrode ein Ionophorgradient innerhalb der Membran in Richtung der Membranaußenseite (niedrigere Konzentration an Ionophor) bildet, was aufgrund der unterschiedlichen Stöchiometrie des Komplexes Ion-Ionophor bei Mg (1:1) und Ca (1:2) bei Verarmung an Ionophor an der Membranaußenseite zu einer bevorzugten Komplexierung des Mg-Ions führt. Dieser Effekt zeigt sich nicht nur beim Vorhandensein hoher Konzentrationen an Magnesiumionen an der Membraninnenseite des Ionenselektiven Sensors, sondern auch bei Vorhandensein hoher Konzentrationen an Calciumionen an der Membraninnenseite des Ionenselektiven Sensors.

## Patentansprüche

1. Potentiometrische, ionenselektive Elektrode zur Messung der Konzentration eines Kations in einer Probe (P), welche auf einem elektrisch isolierenden Substrat (1) ein mittels Dickschichttechnik aufgebrachtes, elektrisch leitendes Elektrodenmaterial (2) aufweist, welches in einem Messbereich (5) von einer ionensensitiven Membran (3), vorzugsweise einer Flüssigmembran, abgedeckt ist, **dadurch gekennzeichnet, dass** im Elektrodenmaterial (2) zumindest ein in Wasser lösliches Salz eines Erdalkalimetalls homogen verteilt ist.

2. Elektrode nach Anspruch 1, **dadurch gekennzeichnet, dass** das Erdalkalimetallsalz eine Wasserlöslichkeit größer 1x10⁻² g/l, vorzugsweise zwischen 1×10⁻² g/l und 1x10⁻¹ g/l, aufweist.

3. Elektrode nach Anspruch 1 oder 2, **dadurch gekennzeichnet, dass** das Elektrodenmaterial (2) fein dispergierte Aktivkohle- Carbon- Graphit- oder Metallpartikel aufweist und 10 bis 40 Gewichtsprozent, vorzugsweise 20 bis 30 Gewichtsprozent, zumindest eines Erdalkalimetallsalzes enthält.

4. Elektrode nach einem der Ansprüche 1 bis 3, zur Messung der Mg²⁺ - oder der Ca²⁺- Konzentration in einer Probe **dadurch gekennzeichnet, dass** das Elektrodenmaterial (2) Magnesiumchlorid oder Kalziumchlorid enthält.

5. Elektrode nach einem der Ansprüche 1 bis 3, zur Messung der Mg²⁺- oder der Ca²⁺- Konzentration in einer Probe **dadurch gekennzeichnet, dass** das Elektrodenmaterial (2) Magnesiumazetat oder Kalziumazetat enthält.

## Claims

1. Potentiometric, ion-selective electrode for measuring the concentration of a cation in a sample (P), which comprises an electrically conductive electrode material (2) applied onto an electrically insulating substrate (1) by a thick-film process, said electrode material being covered in the measurement region (5) by an ion-sensitive membrane (3), preferably a solvent polymeric membrane, **characterized in that** at least one water-soluble salt of an alkaline-earth metal is homogeneously dispersed in the electrode material (2).

2. Electrode according to claim 1, **characterized in that** the salt of the alkaline-earth metal has a solubility in water of greater than 1x10⁻² g/l, preferably between 1x10⁻² g/l and 1x10⁻¹ g/l.

3. Electrode according to claim 1 or 2, **characterized in that** the electrode material (2) contains finely dispersed particles of active charcoal, carbon, graphite or metal, and a salt of an alkaline-earth metal in a proportion of 10 to 40 percent by weight, preferably of 20 to 30 percent by weight.

4. Electrode according to any of claims 1 to 3, for measuring the concentration of Mg²⁺ or Ca²⁺ in a sample, **characterized in that** the electrode material (2) contains magnesium chloride or calcium chloride.

5. Electrode according to any of claims 1 to 3, for measuring the concentration of Mg²⁺ or Ca²⁺ in a sample, **characterized in that** the electrode material (2) contains magnesium acetate or calcium acetate.

## Revendications

1. Électrode potentiométrique et sélectivement sensible aux ions destinée à mesurer la concentration d'un cation dans une éprouvette (P), laquelle comporte un matériau d'électrode (2) conducteur d'électricité introduit au moyen de la technique des couches épaisses sur un substrat (1) isolant électriquement, lequel matériau est recouvert d'une membrane (3) sensible aux ions, de préférence une membrane à liquide, dans un intervalle de mesure (5), **caractérisée en ce que** dans le matériau d'électrode (2), au moins un sel soluble dans l'eau d'un métal alcalinoterreux est répandu de façon homogène.

2. Électrode selon la revendication 1, **caractérisée en ce que** le sel du métal alcalinoterreux présente une solubilité supérieure à 1x10⁻² g/l, de préférence comprise entre 1x10⁻² g/l et 1x10⁻¹ g/l.

3. Électrode selon la revendication 1 ou 2, **caractérisée en ce que** le matériau d'électrode (2) comporte de fines particules en dispersion de métal, de charbon actif, de carbone ou de graphite et contient un pourcentage en poids compris entre 10 et 40 %, de préférence 20 à 30 %, au moins d'un sel de métal alcalinoterreux.

4. Électrode selon l'une quelconque des revendications 1 à 3, destinée à mesurer la concentration en Mg²⁺ ou en Ca²⁺ dans une éprouvette, **caractérisée en ce que** le matériau d'électrode (2) contient du chlorure de magnésium ou du chlorure de calcium.

5. Électrode selon l'une quelconque des revendications 1 à 3, destinée à mesurer la concentration en Mg²⁺ ou en Ca²⁺ dans une sonde, **caractérisée en ce que** le matériau d'électrode (2) contient de l'acétate de magnésium ou de l'acétate de calcium.
